# DEMANDE DE BREVET EUROPEEN

(11) **EP 4 712 321 A1**
(43) Date de publication de la demande: **18.03.2026**
(21) Numéro de dépôt: 25201584.7
(22) Date de dépôt: 11.09.2025
(51) Int. Cl.: H02K 16/00, H02K 21/12, H02K 7/14, H02K 7/116, H02K 21/14, H02K 21/22

(54) **MOTEUR ÉLECTRIQUE DE ROUE D'AÉRONEF, ROUE D'ÉAERONEF ET AÉRONEF**

(30) Priorité: 13.09.2024 FR 2409778
(71) Demandeur: Airbus (S.A.S.), 31700 Blagnac (FR)
(72) Inventeur: ROUYRE, François, 31700 BLAGNAC (FR); CHASSAIGNE, Didier, 31700 BLAGNAC (FR); CREPEL, Olivier, 31700 BLAGNAC (FR)
(74) Mandataire: Cabinet Le Guen Maillet

(57) **Abrégé**

L'invention concerne un moteur électrique (1) de roue d'aéronef (1000) comprenant un alésage traversant et des couronnes concentriques de pôles (P) permettant d'obtenir un couple capable d'opérer un roulage de l'aéronef tout en conservant un encombrement semblable aux solutions conventionnelles. L'invention concerne également une roue d'aéronef comprenant un tel moteur (1), un ensemble de commande de roue d'aéronef, et un aéronef (1000).

Avantageusement il est ainsi possible d'utiliser une roue électrique d'aéronef à la place d'une roue conventionnelle, et ce sans modification substantielle des trains de l'aéronef.

## Description

### DOMAINE TECHNIQUE

La présente invention concerne une roue d'aéronef pourvue d'un moteur électrique. L'invention concerne plus particulièrement une architecture et un agencement de moteur électrique sans balai dans une roue d'aéronef.

### ÉTAT DE LA TECHNIQUE ANTÉRIEURE

L'industrie aéronautique opère de profonds changements en termes de conception des aéronefs, dans un but de réduction importante des émissions de dioxyde de carbone et des oxydes d'azote, en raison des contraintes en matière d'écologie et de développement durable.

L'utilisation accrue d'énergie électrique dans les systèmes d'aéronefs permet de limiter la consommation du carburant en vol et au sol et, en conséquence, les émissions de dioxyde de carbone. Au sol, un déplacement de l'aéronef n'utilisant pas ces moteurs principaux, lorsque ces derniers sont de types thermiques (par exemple de type turboréacteurs ou à soufflante carénée) permettrait d'économiser substantiellement du carburant. L'utilisation de roues à moteur électrique pour opérer les déplacements au sol est alors très intéressante, mais l'adaptation de modèles de roues connus requerrait de nombreuses modifications des trains d'aéronefs existants.

La situation peut être améliorée.

### EXPOSÉ DE L'INVENTION

Un objet de la présente invention est de proposer une roue d'aéronef à moteur électrique présentant des dimensions similaires à celles des roues d'aéronef existantes, afin notamment de permettre un montage sur un essieu de train d'aéronef sans avoir à opérer des modifications conséquentes.

A cet effet, il est proposé un moteur électrique de roue d'aéronef comprenant un stator et un rotor concentriques, le moteur étant agencé tel que :
- le moteur présente un alésage traversant agencé suivant un axe central confondu avec l'axe central du rotor et l'axe central du stator, et,
- au moins une partie dudit rotor est agencée dans ledit stator, et inversement, et,
- chacun dudit stator et dudit rotor présente au moins deux couronnes électromagnétiques solidaires entre elles dont chacune porte des pôles magnétiques agencés pour coopérer avec des pôles magnétiques agencés sur une couronne de l'autre parmi le rotor et le stator.

Selon un mode de réalisation, l'alésage traversant présente un profil complémentaire au profil d'un essieu de train d'aéronef.

Selon un mode de réalisation, chacun desdits stator et rotor présente un nombre supérieur à deux de couronnes électromagnétiques solidaires entre elles, les couronnes étant agencées concentriquement les unes par rapport aux autres autour de l'alésage traversant et concentriquement avec celui-ci.

Un autre objet de l'invention est une roue d'aéronef comprenant un moteur électrique tel que précédemment décrit, une jante montée solidairement du moteur électrique et un pneumatique monté sur la dite jante en périphérie dudit moteur électrique.

L'invention a également pour objet un ensemble de commande de roue d'aéronef comprenant une source d'énergie électrique, un moteur électrique de roue d'aéronef tel que précédemment décrit et un dispositif de contrôle de pôles bobinés, configurés pour contrôler un mouvement relatif de rotation du rotor par rapport au stator.

Enfin, l'invention a pour objet un aéronef comprenant au moins un moteur électrique d'aéronef tel que précédemment décrit ou un ensemble de commande de roue d'aéronef tel que précité.

### BRÈVE DESCRIPTION DES DESSINS

[Fig. 1] illustre schématiquement et en perspective un moteur électrique de roue d'aéronef selon un mode de réalisation, assemblée sur un essieu d'aéronef ;
[Fig. 2] illustre schématiquement et en perspective un stator et un rotor composant le moteur électrique de roue d'aéronef déjà représenté sur la Fig. 1 destinés à être assemblés sur un essieu d'aéronef, avant assemblage ;
[Fig. 3] est une vue en coupe simplifiée du moteur électrique de roue d'aéronef déjà représenté sur la Fig. 1, assemblé sur un essieu d'aéronef ;
[Fig. 4] est une représentation symbolique illustrant l'architecture de l'ensemble que forment en combinaison le rotor et le stator du moteur électrique déjà représenté sur la Fig. 1, selon un premier mode de réalisation ;
[Fig. 5] est une représentation symbolique illustrant l'architecture de l'ensemble que forment en combinaison le rotor et le stator du moteur électrique déjà représenté sur la Fig. 1, selon un deuxième mode de réalisation ;
[Fig. 6] illustre schématiquement un ensemble de commande de roue d'aéronef comprenant un dispositif de contrôle des pôles magnétiques variables ;
[Fig. 7] est un exemple d'architecture interne d'un dispositif de contrôle d'un moteur électrique pour roue d'aéronef, selon un exemple de réalisation ; et,
[Fig. 8] illustre symboliquement un aéronef pourvu d'un moteur électrique de roue d' aéronef tel que déjà représenté sur la Fig. 1.

### EXPOSÉ DÉTAILLÉ DE MODES DE RÉALISATION

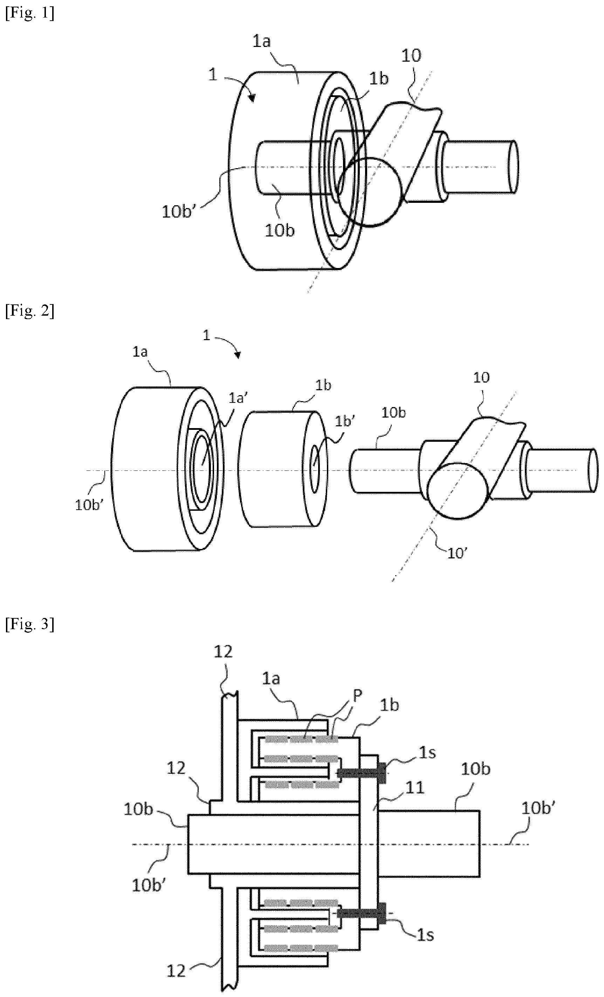

La Fig. 1 représente schématiquement et en perspective un moteur électrique 1 de roue d'aéronef assemblé sur un essieu 10b d'un élément de train d'aéronef 10 selon un mode de réalisation. L'élément de train d'aéronef 10 est encore nommé ici « boggie » ou « bogie » et forme un balancier aux extrémités duquel sont placés deux axes parallèles portant chacun une ou plusieurs roues d'aéronef. Ainsi l'essieu 10b est une partie de l'un de ces deux axes parallèles. A des fins de simplification, seul l'essieu 10b s'étendant selon un axe longitudinal 10b' est décrit ici. Le moteur électrique 1 de roue d'aéronef est principalement composé d'un stator 1b et d'un rotor 1a. Selon l'exemple décrit, le moteur électrique 1 de roue d'aéronef est un moteur dit « *brushless* »*,* de l'anglais, conçu pour fonctionner sans balai. Par exemple, le stator présente des enroulements électriques (ou bobines) configurés pour opérer comme des pôles magnétiques variables contrôlés et le stator présente des pôles magnétiques permanents, de sorte qu'une alimentation contrôlée selon un ordonnancement déterminé des pôles magnétiques variables du stator génère une rotation du rotor. Selon un exemple de réalisation, la position relative et concentrique du stator 1b et du rotor 1a est assurée par une transmission de type épicycloïdale entre une surface externe du rotor 1a et une surface interne d'une jante de la roue qui comprend le moteur de roue, solidaire du rotor 1a, la jante comprenant un alésage central configuré pour être emmanché sur l'essieu 10b. Des axes porte-satellites de pignons satellites sont portés par le stator 1b. La **Fig. 2** représente une vue en perspective des mêmes éléments, avant assemblage. Le boggie d'aéronef s'étend selon un axe 10' correspondant à un axe de déplacement de l'avion en ligne droite. Avantageusement, le stator 1b présente une ouverture traversante centrale 1b' et le rotor présente une ouverture traversante 1a' permettant un montage de l'ensemble rotor et stator sur et autour de l'essieu 10b de train d'aéronef. En outre, il est possible de constater que le stator 1b présente une forme globale externe de cloche configurée pour s'insérer au moins partiellement à l'intérieur du rotor 1a présentant lui aussi une forme globale externe de cloche. Avantageusement et astucieusement, l'ouverture traversante ainsi constituée par la combinaison de l'ouverture traversante 1b' du stator 1b et de l'ouverture traversante 1a' du rotor 1a permet un montage du moteur électrique 1 de roue d'aéronef sur un boggie d'aéronef sans requérir de modification structurelle du boggie. Il en résulte qu'une roue d'aéronef conçue à partir d'un tel moteur électrique est « rétro-compatible » avec les boggies existants d'aéronef, ce qui permet de faire évoluer les trains d'atterrissages existants sans avoir à réaliser de modification structurelle importante.

La **Fig. 3** est une vue en coupe simplifiée du moteur électrique 1 de roue d'aéronef assemblé sur l'essieu 10b. Selon l'exemple d'assemblage (c'est-à-dire de montage) décrit, le stator 1b du moteur électrique 1 de roue d'aéronef est fixé par des vis 1s sur un épaulement 11 de l'essieu 10b et le rotor 1a du moteur électrique 1 de roue d'aéronef est fixé solidairement d'une jante 12 de roue d'aéronef, laquelle est configurée pour porter un pneumatique d'aéronef en périphérie de la jante 12. Ainsi, les charges radiales ne sont avantageusement appliquées qu'à la jante 12 et le moteur n'a pas à supporter directement ces charges radiales. Des rectangles gris représentent des pôles magnétiques variables P reliés à un dispositif de contrôle du moteur électrique 1 de roue d'aéronef. L'ensemble stator et rotor est ainsi monté « en sandwich » entre la jante 12 et l'épaulement 11 de l'essieu 10b. Pour ce faire, la jante 12 présente une forme générale de tube, configurée pour s'emmancher sur l'essieu 10b à partir duquel s'étend au moins le corps de la jante 12 prenant la forme générale d'un disque ou d'un plateau circulaire, radialement par rapport à l'axe 10b', lequel axe est en outre un axe de rotation autour duquel sont destinés à tourner solidairement le rotor et la jante 12. Le déplacement de la jante 12 en translation le long de l'axe 10b' est limité dans un sens par l'épaulement 11 et dans l'autre sens par des moyens de positionnement et de blocage en translation non représentés sur les figures dans la mesure où ces éléments ne sont pas utiles à la compréhension de l'invention.

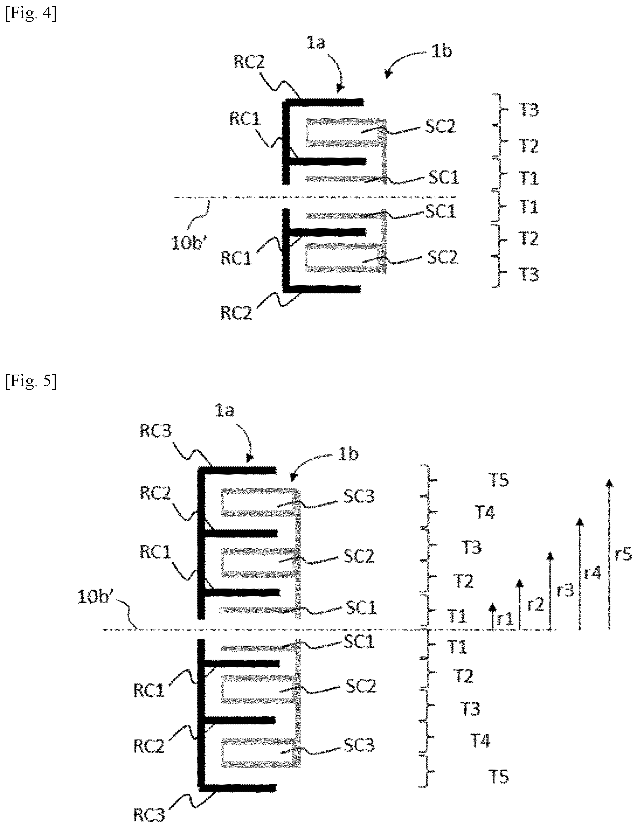

La **Fig. 4** est une représentation symbolique illustrant l'architecture de l'ensemble que forment en combinaison le rotor 1a et le stator 1b selon un premier mode de réalisation. Selon ce premier mode de réalisation, le stator 1b présente au moins deux couronnes magnétiques concentriques SC1 et SC2 portant des enroulements régulièrement répartis configurés pour constituer des pôles magnétiques variables. La couronne SC1 constitue une couronne intérieure du stator 1b et la couronne SC2 constitue une couronne extérieure du stator 1b. Du côté du stator 1b, des pôles magnétiques variables P sont agencés et régulièrement répartis sur la surface extérieure de la couronne intérieure SC1 ainsi que sur les surfaces intérieure et extérieure de la couronne extérieure SC2, comme cela est illustré sur la Fig. 1. Du côté du rotor 1a, deux couronnes magnétiques concentriques RC1 et RC2 portent des pôles magnétiques permanents agencés et régulièrement répartis en regard des pôles magnétiques P, c'est-à-dire sur les surfaces intérieure et extérieure de la couronne intérieure RC1 du rotor 1a et sur la surface intérieure de la couronne extérieure RC2 du rotor 1a. Astucieusement, les couronnes du stator 1b et du rotor 1a sont imbriquées l'une dans l'autre, c'est-à-dire que la couronne SC1 du stator 1b est presque intégralement insérée dans le volume intérieur de la couronne RC1 du rotor 1a, elle-même presque intégralement insérée dans le volume intérieur de la couronne SC2 du stator 1b, cette dernière étant presque intégralement insérée dans le volume intérieur de la couronne RC2 du rotor 1a.

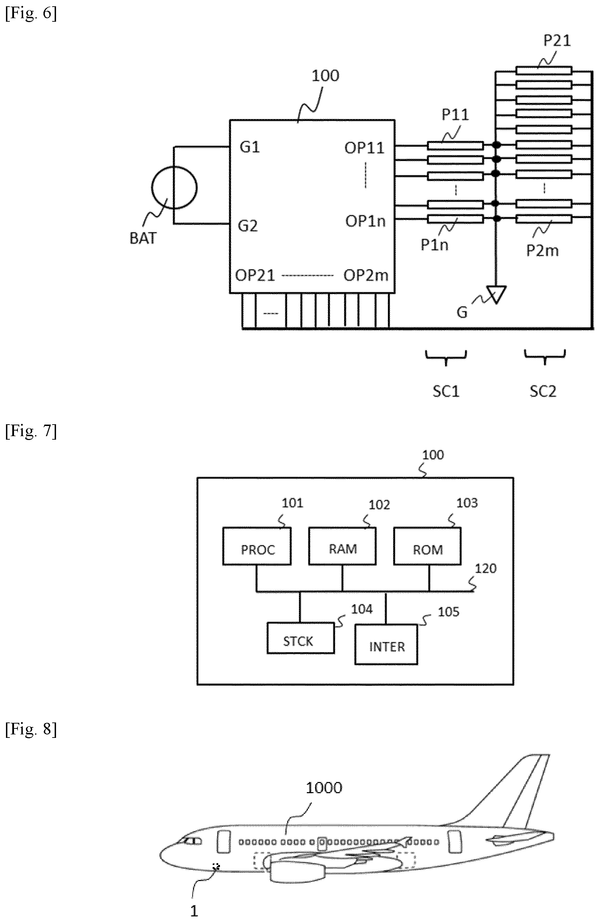

Les pôles magnétiques variables P du stator 1b ont vocation à coopérer avec les pôles magnétiques permanents du rotor 1a pour opérer une rotation relative du rotor 1a par rapport au stator 1b, selon un ordonnancement de tensions appliquées aux enroulements électriques qui constituent les pôles magnétiques variables P. Un dispositif de contrôle de moteur électrique de type sans balai (représenté sur la Fig. 7) est utilisé pour générer successivement des tensions et créer des champs magnétiques tournants de nature à entrainer un mouvement en rotation du rotor 1a. Astucieusement, l'utilisation d'une « double couronne » magnétique pour le rotor 1a d'une part et pour la stator 1b d'autre part, les deux « double couronnes » étant imbriquées l'une dans l'autre de sorte à créer une alternance de pôles magnétiques variables et de pôles magnétiques permanents selon des axes radiaux, permet d'obtenir un couple important en rotation, du fait des champs magnétiques tournants conjugués qu'il est alors possible d'obtenir dans un volume cylindrique total disponible relativement réduit et propice à un agencement dans une roue d'aéronef présentant des dimensions habituelles. Chaque combinaison de pôles magnétiques variables agencés sur une surface de l'une des couronnes précitées et de pôles magnétiques permanents agencées sur une surface d'une couronne voisine est nommée ici, dans l'architecture électromagnétique contrôlée décrite, « niveau électromagnétique » ou « étage électromagnétique ». Ainsi, selon l'exemple d'agencement du stator 1b combiné à l'agencement du rotor 1a, trois niveaux concentriques T1, T2 et T3 sont utilisés en combinaison pour produire un couple mécanique en rotation.

Un tel agencement autorise astucieusement une extension radiale de l'architecture électromagnétique précédemment décrite, par augmentation du nombre de niveaux électromagnétiques, sans requérir d'encombrement (ou volume) additionnel en largeur. Ainsi, et tel qu'illustré à titre d'exemple sur la Fig. 5, une architecture dite électromagnétique portant un ou plusieurs étages supplémentaires peut être obtenue par adjonction de couronnes concentriques SC3 et RC3 imbriquées selon un agencement similaire à ce qui est déjà décrit concernant les couronnes SC1 et SC2 en collaboration avec les couronnes RC1 et RC2. La couronne SC3 du stator 1b coopère avec les couronnes RC2 et RC3 du rotor 1a, si bien que cinq niveaux concentriques T1, T2, T3, T4 et T5 sont alors disponibles pour coopérer à la génération d'un couple mécanique utile à l'entraînement en rotation du rotor 1a par rapport au stator 1b. Il est alors possible de déterminer des rayons moyens r1, r2, r3, r4 et r5 des entrefers circulaires créés entre les pôles magnétiques variables contrôlés et les pôles magnétiques permanents. Ces rayons sont à considérer pour opérer un contrôle en tension cohérent des différents pôles magnétiques variables de sorte à éviter de créer des champs magnétiques « contre-productifs » et d'optimiser la conjugaison des différents champs magnétiques tournants respectivement créés dans les différents étages électromagnétiques implémentés selon cette architecture.

Ainsi, si V1 est la vitesse linéaire de déplacement d'un point de l'étage T1, il convient de veiller à maintenir une égalité r1V1 = r2V2 = r3V3 lorsque V2 et V3 sont respectivement des vitesses de déplacements linéaires de points situés sur les étages T2 et T3 et sur un même rayon que le point considéré de l'étage T1.

Pour ce faire un ensemble de commande de roue d'aéronef comprenant un dispositif de contrôle 100 des pôles magnétiques variables est utilisé selon un principe illustré schématiquement sur la **Fig. 6****.** Selon l'exemple représenté, le dispositif de contrôle 100, est connecté à chacun des pôles magnétiques variables P des couronnes SC1 et SC2 du stator 1b. la couronne SC1 comprend n pôles P P11 à P1n respectivement reliés à des sorties de contrôle OP11 à OP1n et la couronne SC2 comprend m pôles P P21 à P2m respectivement reliés à des sorties de contrôle OP21 à OP2m. Les sorties de contrôle OP11 à OP1n et OP21 à OP2M sont configurées pour délivrer des courants nominaux et maximaux de nature à faire fonctionner le moteur électrique 1 de roue d'aéronef dans des conditions nominales. Ainsi, l'ensemble de commande comprend de la circuiterie électronique de commande et de puissance adaptée aux besoins du moteur électrique 1 de roue d'aéronef. Chacun des pôles magnétiques variables P (C'est-à-dire P11 à P1n, P21 à P2m, etc...) est relié d'une part à une sortie de contrôle du dispositif de contrôle 100 et d'autre part à une masse électrique G. En outre, le dispositif de contrôle 100 est connecté à une alimentation électrique BAT via des entrées d'alimentation G1 et G2. Ainsi, le dispositif de contrôle 100 est configuré pour générer un ordonnancement cohérent de tensions appliquées aux différents pôles des différents étages T1, T2, T3 ou encore T4 et T5 le cas échéant, pour que les champs magnétiques tournants des différents étages coopèrent efficacement sans créer de quelconques couples de rotation interférents ou de sens contraires (entre eux).

La **Fig. 7** illustre schématiquement un exemple d'architecture interne du dispositif de contrôle 100.

Selon l'exemple d'architecture matérielle représenté à la Fig. 7, le dispositif de contrôle 100 de moteur électrique de roue d' aéronef comprend alors, reliés par un bus de communication 120 : un processeur ou CPU (« Central Processing Unit » en anglais) 101 ; une mémoire vive RAM (« Random Access Memory » en anglais) 102 ; une mémoire morte ROM (« Read Only Memory » en anglais) 103 ; une unité de stockage telle qu'un disque dur (ou un lecteur de support de stockage, tel qu'un lecteur de cartes SD (« Secure Digital » en anglais) 104 ; un module d'interfaces de communication 105 permettant au dispositif de contrôle de moteur électrique de roue d'aéronef de communiquer avec des dispositifs distants, tels que les pôles magnétiques variables P ou encore d'autres systèmes embarqués de l'aéronef dans lequel il est embarqué.

Le processeur 101 du dispositif de contrôle de moteur électrique de roue d'aéronef est capable d'exécuter des instructions chargées dans la RAM 102 à partir de la ROM 103, d'une mémoire externe (non représentée), d'un support de stockage (tel qu'une carte SD), ou d'un réseau de communication. Lorsque le dispositif de contrôle 100 de moteur électrique de roue d'aéronef est mis sous tension, le processeur 101 est capable de lire de la RAM 102 des instructions et de les exécuter. Ces instructions forment un programme d'ordinateur causant la mise en œuvre, par le processeur 101 du dispositif de contrôle de moteur électrique de roue d'aéronef, de tout ou partie d'un procédé de contrôle des tensions appliquées aux pôles magnétiques variables P du stator 1b.

Tout ou partie d'un tel procédé de commande de moteur électrique de roue d' aéronef peut alors être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif 100 de contrôle de moteur électrique de roue d'aéronef comprend de la circuiterie électronique configurée pour mettre en œuvre un procédé de contrôle de tensions à appliquer aux pôles magnétiques variables P pour créer des champs magnétiques tournants synchronisés et optimiser ainsi le couple de rotation obtenu dans un moteur électrique de roue d'aéronef agencé selon l'architecture décrite dans la présente description. Bien évidemment, le dispositif de contrôle 100 de moteur électrique de roue d'aéronef comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus, cette liste étant non exhaustive.

La **Fig. 8** est une illustration schématique d'un aéronef 1000 comprenant au moins un moteur électrique tel que le moteur électrique 1 de roue d'aéronef agencé dans l'une ou plusieurs de ses roues. Avantageusement, il est ainsi possible d'opérer des phases de roulage au sol sans requérir de puissance en provenance de moteurs thermiques de l'aéronef 1000, ce qui permet de réduire le nombre d'émissions de gaz carboniques. En outre, l'usage d'un moteur électrique tel que le moteur électrique 1 à bord de l'aéronef 1000 permet avantageusement d'éviter toute modification structurelle du train de l'aéronef 1000 qui demeure compatible avec une roue d'aéronef classique. Cela simplifie grandement les opérations visant à adapter des roues électriques d'aéronef et des opérations de maintenance en lien avec des roues de l'aéronef 1000.

## Revendications

1. Moteur électrique (1) de roue d'aéronef comprenant un stator (1b) et un rotor (1a) concentriques, ledit moteur (1) étant **caractérisé en ce que** :
- ledit moteur (1) présente un alésage traversant agencé suivant un axe central (10b') confondu avec l'axe central dudit rotor et l'axe central dudit stator, et,
- au moins une partie dudit rotor (1a) est agencée dans ledit stator (1b), et inversement, et,
- chacun dudit stator (1b) et dudit rotor (1a) présente au moins deux couronnes électromagnétiques (SC1, SC2, RC1, RC2) solidaires entre elles dont chacune porte des pôles magnétiques agencés pour coopérer avec des pôles magnétiques agencés sur une couronne de l'autre parmi ledit rotor et ledit stator.

2. Moteur électrique (1) de roue d'aéronef selon la revendication 1 dans lequel ledit alésage traversant présente un profil complémentaire à un profil d'un essieu de train d'aéronef.

3. Moteur électrique (1) de roue d'aéronef selon l'une des revendications 1 et 2, dans lequel chacun desdits stator (1b) et rotor (1a) présente un nombre supérieur à deux de couronnes électromagnétiques solidaires entre elles, les couronnes magnétiques étant agencées concentriquement les unes par rapport aux autres autour dudit alésage traversant et concentriquement avec celui-ci.

4. Roue d'aéronef comprenant un moteur électrique (1) selon l'une des revendications 1 à 3, une jante montée solidairement dudit moteur électrique (1) et un pneumatique monté sur ladite jante en périphérie dudit moteur électrique (1).

5. Ensemble de commande de roue d'aéronef comprenant une source d'énergie électrique (BAT), un moteur électrique (1) de roue d'aéronef selon l'une des revendications 1 à 3 et un dispositif de contrôle (100) de pôles magnétiques variables, configurés pour contrôler un mouvement relatif de rotation dudit rotor (1a) par rapport audit stator (1b).

6. Aéronef (1000) comprenant au moins un moteur électrique d'aéronef selon l'une des revendications 1 à 3 ou un ensemble de commande de roue d'aéronef selon la revendication 5.
